# FASCICULE DE BREVET EUROPEEN

(11) **EP 1 216 361 B1**
(45) Date de publication et mention de la délivrance du brevet: **19.05.2004**
(21) Numéro de dépôt: 01949553.0
(22) Date de dépôt: 28.06.2001
(51) Int. Cl.: F15B 20/00, F15B 11/17, F15B 7/00, B64C 13/42

(54) **SYSTEME D'ACTIONNEMENT HYDRAULIQUE A COMMANDE ELECTRIQUE**
ELEKTRISCH-GESTEUERTES, HYDRAULISCHES ANTRIEBSSYSTEM
HYDRAULIC ACTUATING SYSTEM WITH ELECTRIC CONTROL

(30) Priorité: 28.06.2000 FR 0008304
(43) Date de publication de la demande: 26.06.2002
(73) Titulaire: AIRBUS FRANCE, 31060 Toulouse (FR)
(72) Inventeur: VAN DEN BOSSCHE, Dominique, Alain, . (FR); ORTEGA, Jean-Marc, François, Michel, F-31700 Blagnac (FR); CASSE, Christophe, Lionel, René, F-31100 Toulouse (FR)
(74) Mandataire: Hauer, Bernard
(86) Numéro de dépôt international: PCT/FR2001/002048
(87) Numéro de publication internationale: WO 2002/001080

(56) Documents cités:
- DE-A- 19 654 781
- FR-A- 2 600 724
- FR-A- 2 666 787
- US-A- 2 643 516
- CROKE S ET AL: "MORE ELECTRIC INITIATIVE - POWER-BY-WIRE ACTUATION ALTERNATIVES" PROCEEDINGS OF THE NATIONAL AEROSPACE AND ELECTRONICS CONFERENCE. (NAECON),US,NEW YORK, IEEE, 23 mai 1994 (1994-05-23), pages 1338-1346, XP000510809 ISBN: 0-7803-1894-3

## Description

La présente invention concerne un système d'actionnement hydraulique à commande électrique. Quoique non exclusivement, il est particulièrement adapté à être utilisé à bord des aéronefs, pour la commande d'organes, tels que par exemple des gouvernes.

On connaît déjà des systèmes d'actionnement hydraulique à commande électrique, comportant :
- une servocommande, destinée à commander au moins un organe mobile, tel qu'une gouverne, et comprenant un cylindre à l'intérieur duquel peut se déplacer un piston auquel est relié ledit organe mobile, ledit piston séparant ledit cylindre en deux chambres, dont chacune d'elles est pourvue d'un orifice de raccordement hydraulique, et ladite servocommande étant pourvue d'une valve de commande, par exemple du type servovalve ou valve à commande directe, reliée à un circuit hydraulique dans lequel circule un fluide hydraulique sous pression ;
- une pompe hydraulique bidirectionnelle, entraînée en rotation par un moteur électrique piloté par un dispositif électronique de puissance ; et
- un dispositif de commutation permettant de relier lesdits orifices de raccordement hydraulique, soit à ladite valve de commande, soit à ladite pompe.

Dans ces systèmes connus, l'actionnement dudit organe mobile est, en fonctionnement normal, assuré par ladite servocommande alimentée en fluide hydraulique par ledit circuit, à travers ladite valve et ledit dispositif de commutation. En revanche, en cas de défaillance dudit circuit hydraulique ou de ladite valve, le dispositif de commutation relie ladite servocommande à ladite pompe hydraulique. L'actionnement dudit organe mobile résulte alors, en fonctionnement exceptionnel, de l'alimentation de la servocommande par ladite pompe mue par le moteur électrique, à travers le dispositif de commutation.

De ce fait, ces systèmes connus sont généralement appelés "actionneurs hydrauliques à secours électrique" et désignés par l'abréviation EBHA (pour Electrical Back-up Hydraulic Actuator).

Bien entendu, aussi bien en fonctionnement normal (alimentation du système d'actionnement à partir du circuit hydraulique) qu'en fonctionnement de secours (alimentation du système d'actionnement à partir de la pompe et du moteur électrique), de tels systèmes connus doivent pouvoir assurer les performances maximales requises pour actionner ledit organe. Il en résulte donc que, d'une part, le circuit hydraulique doit être dimensionné pour la puissance maximale du système d'actionnement et que, d'autre part, bien qu'utilisés peu fréquemment, ladite pompe et ses accessoires doivent être fortement dimensionnés, ce qui en augmente le coût et la masse. Par ailleurs, du fait même qu'ils sont peu utilisés, ils peuvent être le siège de pannes difficilement détectables.

La présente invention a pour objet de remédier à ces inconvénients. Elle concerne un système d'actionnement hydraulique à commande électrique du type rappelé ci-dessus dans lequel non seulement le dimensionnement de la pompe et de ses accessoires, mais encore celui du circuit hydraulique, de la valve et de leurs accessoires peuvent être réduits, tout en rendant plus visibles les éventuelles pannes de la pompe et de ses accessoires.

A cette fin, selon l'invention, le système d'actionnement hydraulique à commande électrique, du type mentionné ci-dessus, est remarquable en ce que ledit dispositif de commutation est apte de plus à relier lesdits orifices de raccordement hydraulique desdites chambres à la fois à ladite valve de commande et à ladite pompe, pour permettre de fournir à ladite servocommande la somme de la puissance hydraulique délivrée par ledit circuit hydraulique et de la puissance hydraulique, d'origine électrique, engendrée par ladite pompe actionnée par ledit moteur électrique.

Un tel système peut donc être qualifié d'"actionneur hydraulique électriquement assisté" et être désigné par l'abréviation EAHA (pour Electrically Assisted Hydraulic Actuator).

Ainsi, grâce à la présente invention, il est possible d'assurer les performances maximales requises par sommation de la puissance hydraulique et de la puissance électrique disponibles, la puissance électrique n'étant mise en oeuvre que lors de fortes demandes de puissance susceptibles d'excéder la capacité hydraulique. En d'autres termes, le circuit hydraulique et la valve de commande --qui délivrent la puissance hydraulique-- sont dimensionnés pour pouvoir effectuer la grande majorité des actionnements, qui nécessitent une puissance inférieure à celle exigée pour les performances maximales. En revanche, la pompe hydraulique et ses accessoires --qui délivrent la puissance d'origine électrique-- sont dimensionnés pour fournir une puissance d'appoint qui, additionnée à ladite puissance hydraulique, permet d'assurer lesdites performances maximales. Il en résulte que chaque élément du système selon l'invention peut être dimensionné en fonction de la puissance réelle --inférieure à la puissance maximale dudit système-- qu'il doit fournir. De plus, puisque les éléments "électriques" du système, c'est-à-dire le moteur, la pompe et leurs accessoires, sont sollicités au cours du fonctionnement dudit système, leurs pannes ne peuvent rester cachées.

Dans le système conforme à la présente invention, ledit dispositif de commutation peut être constitué par un premier et un second sélecteurs à commandes spécifiques, ledit premier sélecteur pouvant être interposé entre ladite valve et lesdits orifices de raccordement, tandis que le second sélecteur peut être disposé entre ces derniers et ladite pompe, et les commandes spécifiques desdits premier et second sélecteurs permettant de relier lesdits orifices de raccordement hydraulique non seulement à ladite valve de commande ou à ladite pompe, mais encore à la fois à ladite valve de commande et à ladite pompe.

De préférence, ledit premier sélecteur :
- peut prendre soit un état passant, soit un état non passant ;
- prend spontanément son état non passant ; et
- est forcé à son état passant par l'action de la pression du fluide hydraulique dudit circuit hydraulique, à travers une électrovanne commandée.

Par ailleurs, selon un premier mode de réalisation, ledit second sélecteur :
- peut prendre soit un état passant, soit un état non passant ;
- prend spontanément son état non passant ; et
- est forcé à son état passant par l'action d'un dispositif de commande.

En variante, ledit second sélecteur :
- peut prendre l'un ou l'autre de trois états, à savoir un état passant, un état non passant et un état passif pour lequel ledit second sélecteur établit une communication extérieure avec restriction entre lesdits orifices de raccordement hydraulique ;
- prend spontanément ledit état passif ;
- est forcé à son état passant par l'action d'un dispositif de commande ; et
- est forcé à son état non passant par l'action de la pression du fluide hydraulique dudit circuit hydraulique, à travers ladite électrovanne commandée.

Les figures du dessin annexé feront bien comprendre comment l'invention peut être réalisée. Sur ces figures, des références identiques désignent des éléments semblables.

La figure 1 illustre schématiquement un système d'actionnement hydraulique conforme à la présente invention.

Les figures 2, 3 et 4 illustrent respectivement trois modes de fonctionnèment du système de la figure 1.

La figure 5 illustre schématiquement une variante de réalisation du système d'actionnement hydraulique conforme à la présente invention, dans un mode de fonctionnement passif.

Les figures 6, 7 et 8 illustrent le système de la figure 5 dans trois autres modes de fonctionnement.

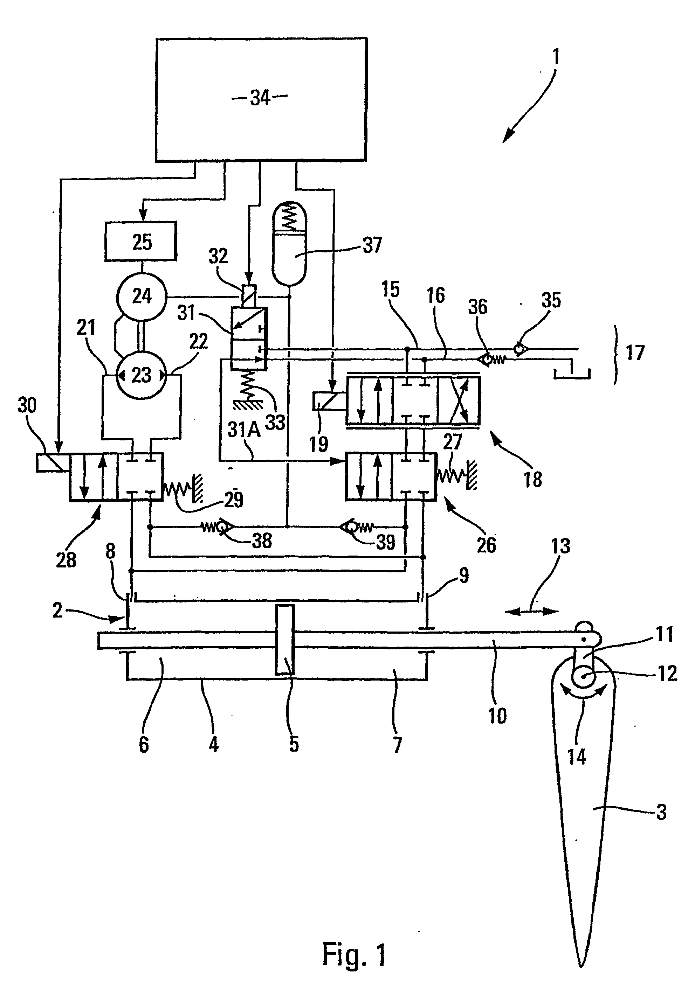

Le système d'actionnement hydraulique à commande électrique 1, montré par la figure 1 et conforme à la présente invention, comporte une servocommande 2 destinée à commander au moins un organe mobile 3, par exemple une gouverne d'aéronef. La servocommande 2 comporte un cylindre 4 à l'intérieur duquel peut se déplacer un piston 5 séparant ledit cylindre 4 en deux chambres 6 et 7. Les chambres 6 et 7 sont pourvues chacune d'un orifice de raccordement hydraulique 8 et 9, respectivement. Le piston 5 est solidaire d'une tige de piston 10 articulée à un maneton 11, solidaire dudit organe mobile 3 en rotation autour d'un axe 12 (orthogonal au plan de la figure 1). On conçoit aisément que, lorsque ladite tige de piston 10 se déplace coaxialement à elle-même dans l'un ou l'autre sens, comme indiqué par la double flèche 13, l'organe mobile 3 tourne autour dudit axe 12 dans le sens correspondant, comme indiqué par la double flèche 14.

Chacun des orifices de raccordement 8 et 9 de la servocommande 2 peut être relié soit à la ligne d'alimentation 15, soit à la ligne de retour 16 d'un circuit hydraulique 17, dans lequel circule un fluide hydraulique sous pression, par l'intermédiaire d'une valve de commande 18, par exemple du type servovalve ou valve à commande directe. La valve de commande 18 est commandée par un dispositif 19, par exemple du type solénoïde. Sous l'action dudit dispositif de commande 19, la valve 18 peut prendre :
- une position pour laquelle la communication est coupée entre le circuit 17 et la servocommande 2 (position représentée sur la figure 1) ;
- une position pour laquelle l'orifice de raccordement 8 est relié à la ligne d'alimentation 15, alors que l'orifice de raccordement 9 est relié à la ligne de retour 16 ; et
- une position pour laquelle l'orifice de raccordement 8 est relié à la ligne de retour 16, alors que l'orifice de raccordement 9 est relié à la ligne d'alimentation 15.

De plus, lesdits orifices de raccordement 8 et 9 peuvent être reliés respectivement aux sorties 21 et 22 d'une pompe hydraulique bidirectionnelle 23, entraînée en rotation par un moteur électrique 24, piloté par un dispositif électronique de puissance 25.

Entre la valve de commande 18 et les orifices de raccordement 8 et 9, est monté un premier sélecteur 26, chargé par un ressort 27. De façon spontanée, ledit sélecteur 26 prend, sous l'action du ressort 27, sa position non passante pour laquelle la communication est interrompue entre la valve de commande 18 et la servocommande 2.

De même, entre la pompe 23 et les orifices de raccordement 8 et 9, est monté un second sélecteur 28, chargé par un ressort 29. De façon spontanée, ledit sélecteur 28 prend, sous l'action du ressort 29, sa position non passante pour laquelle la communication est interrompue entre la pompe 23 et la servocommande 2. Par ailleurs, un dispositif de commande 30, par exemple du type solénoïde, est apte à faire passer le sélecteur 28 à sa position passante établissant la communication entre la pompe 23 et la servocommande 2, à l'encontre de l'action du ressort 29.

Une électrovanne à deux positions 31, commandée par un dispositif de commande 32 à l'encontre de l'action d'un ressort 33, est interposée entre le circuit hydraulique 17 et le sélecteur 26 et est reliée à ce dernier par une ligne 31 A. Lorsque le dispositif de commande 32, par exemple un solénoïde, est au repos, le ressort 33 presse l'électrovanne 31 dans sa position pour laquelle ledit sélecteur 26 est relié à la ligne de retour 16 du circuit hydraulique 17. En revanche, lorsque le dispositif de commande 32 est actif, il comprime le ressort 33 et l'électrovanne 31 est dans sa position passante pour laquelle le sélecteur 26 est relié à la ligne d'alimentation 15 du circuit hydraulique 17. Dans cette dernière position, la pression du fluide hydraulique dans la ligne 15 surmonte l'action du ressort 27, de sorte que le sélecteur 26 passe dans sa position passante.

Les dispositifs de commande 19, 30, 32 et le dispositif électronique de puissance 25 peuvent être commandés par un dispositif 34, par exemple un calculateur.

Le système d'actionnement hydraulique 1 est complété par des clapets d'isolation 35 et 36, respectivement montés sur les lignes 15 et 16 du circuit 17, ainsi que par un accumulateur hydraulique 37 et par des clapets de réalimentation 38 et 39.

Sur la figure 1, le-système 1 est représenté dans son état de repos, aucun des dispositifs de commande 19, 25, 30 et 32 n'étant activé par le calculateur 34.

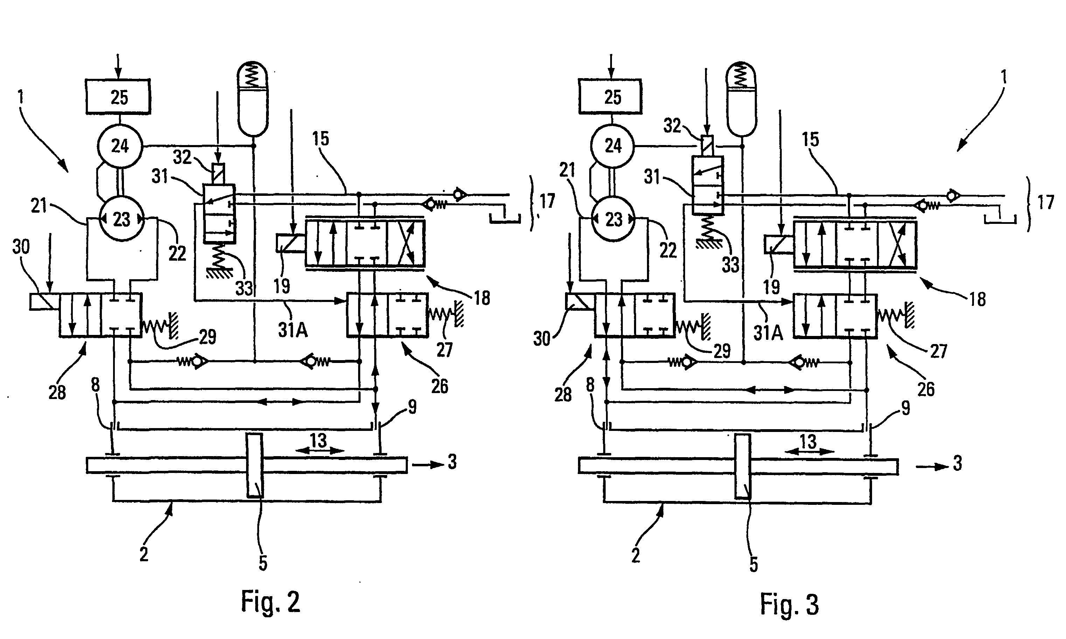

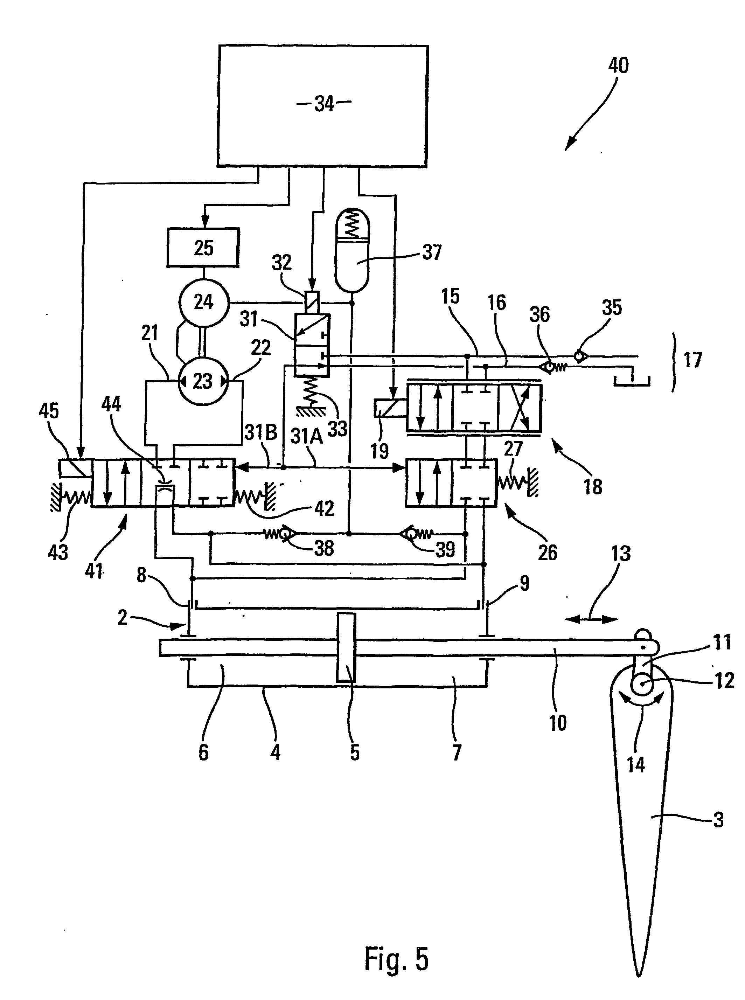

Comme cela est illustré schématiquement par les figures 2, 3 et 4, le système 1 peut fonctionner selon trois modes différents.

Dans le premier mode illustré par la figure 2, le calculateur 34 active le dispositif de commande 32 de l'électrovanne 31, mais laisse le dispositif de commande 30 désactivé. Dans ces conditions, l'électrovanne 31 adresse la pression de la ligne 15 au sélecteur 26. Il en résulte que ledit premier sélecteur 26 passe dans sa position passante, ladite pression surmontant l'action du ressort 27. Par suite, les orifices de raccordement 8 et 9 du cylindre 2 sont isolés de la pompe 23, alors qu'ils peuvent être mis en communication avec le réseau hydraulique 17, à travers la valve de commande 18. Le dispositif de commande 19 de cette dernière étant commandé par le calculateur 34, le piston 5 et l'organe 3 sont donc actionnés à partir du seul fluide hydraulique du réseau 17.

Dans le deuxième mode de fonctionnement du système 1, illustré schématiquement par la figure 3, le calculateur 34 active le dispositif de commande 30 du second sélecteur 28, ainsi que le dispositif électronique de puissance 25, mais laisse désactivés les dispositifs de commande 19 et 32. Par suite, l'électrovanne 31 et le premier sélecteur 26 sont dans leur position non passante et la valve de commande 18 est inactive. En revanche, le dispositif de commande 30 surmonte l'action du ressort 29 et le second sélecteur 28 passe en position passante. Par suite, les orifices de raccordement 8 et 9 du cylindre 2 sont isolés du circuit hydraulique 17, mais sont reliés à la pompe bidirectionnelle 23, à travers le second sélecteur 28. Le piston 5 et l'organe 3 sont donc alors actionnés à partir de la pompe 23, par pilotage du moteur électrique 24 par le dispositif électronique de puissance 25, lui-même commandé par le calculateur 34.

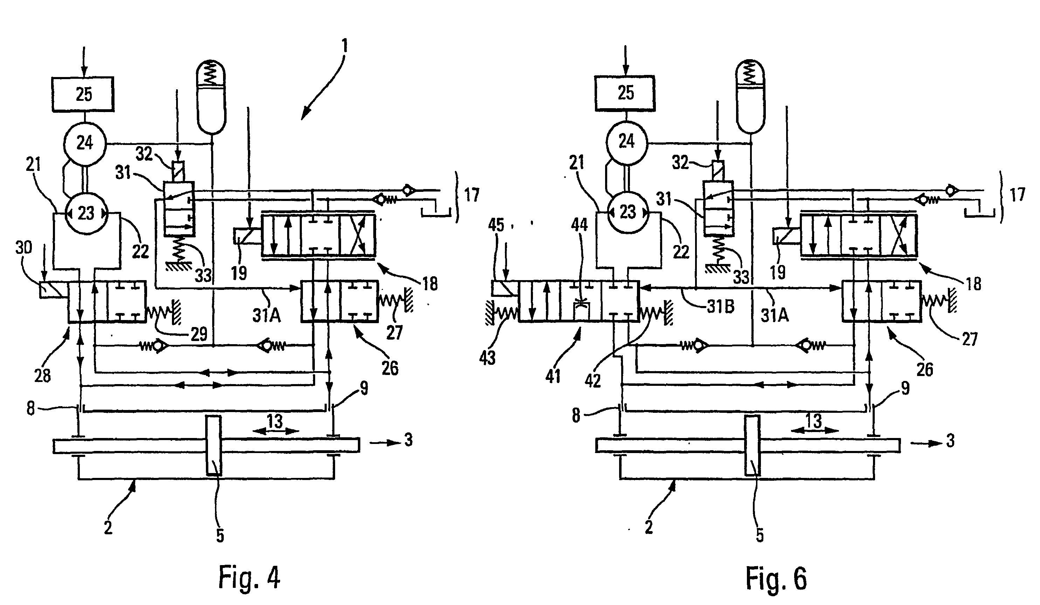

Quant au troisième mode de fonctionnement du système 1, illustré par la figure 4, il résulte des activations concomitantes des dispositifs de commande 19, 30, 32 et du dispositif électronique de puissance 25 par le calculateur 34. Dans ces conditions :
- l'électrovanne 31 et le premier sélecteur 26 sont passants, comme dans le premier mode de fonctionnement ; et
- le second sélecteur 28 est également passant (comme dans le second mode de fonctionnement), du fait que le dispositif de commande 30 surmonte l'action du ressort 29.

Par suite, les orifices de raccordement 8 et 9 du cylindre 2 sont reliés, à la fois, au circuit 17, à travers la valve de commande 18, et à la pompe 23. Le piston 5 et l'organe 3 sont donc actionnés conjointement à partir du circuit hydraulique 17 et à partir de la pompe 23 mue électriquement.

La variante de réalisation 40 du système de l'invention, représenté sur la figure 5, est identique au système 1 des figures 1 à 4, sauf en ce qui concerne le second sélecteur. Dans le cas du système 40, ledit second sélecteur 41 (remplaçant le second sélecteur 28) comporte, en plus de positions passante et non passante, une position passive pour laquelle ledit second sélecteur 41 établit une communication extérieure avec restriction entre les orifices de raccordement hydraulique 8 et 9 du cylindre 4. Cette position passive (représentée sur la figure 5) existe lorsque le premier sélecteur 26 est non passant et elle est définie par l'action de ressorts antagonistes 42 et 43. Suivant le niveau de restriction de l'orifice 44 réalisant cette communication avec restriction, on peut obtenir une mise en by-pass du cylindre 2, un amortissement plus ou moins important des mouvements du piston 5 et de la gouverne 3, ou bien encore un quasi-blocage dudit piston 5.

La position passive du second sélecteur 41 se trouve en position intermédiaire entre la position passante et la position non passante. Un dispositif de commande 45 (analogue au dispositif 30), commandé par le calculateur 34, est apte à faire passer ledit second sélecteur 41 de sa position passive à sa position passante. De plus, le second sélecteur 41 peut passer de sa position passive à sa position non passante sous l'action de la pression du fluide hydraulique dans la ligne d'alimentation 15, à travers l'électrovanne commandée 31 et une liaison 31B.

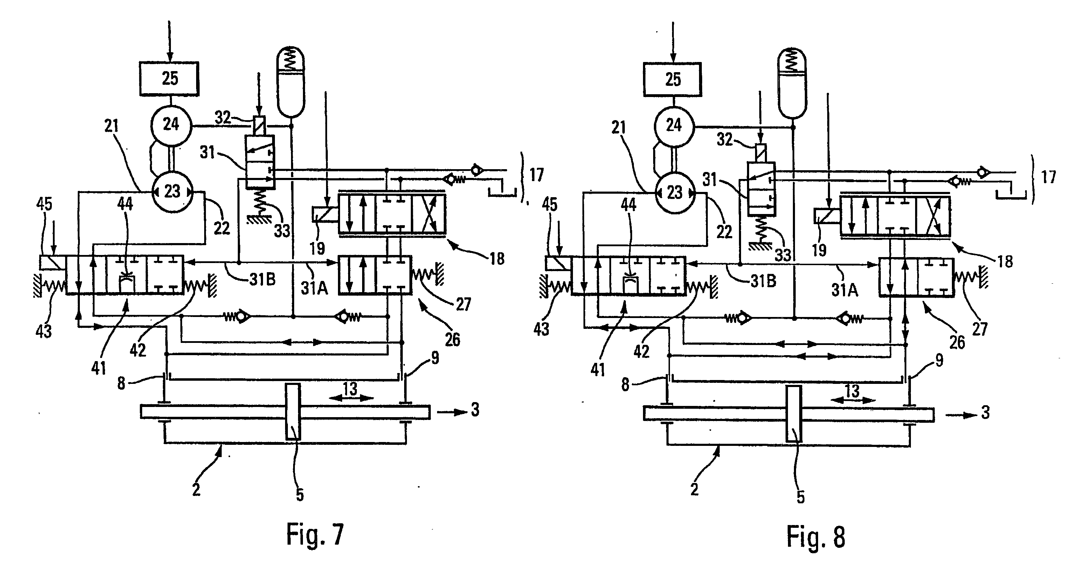

Par suite, le fonctionnement du système 40 est le suivant :
- selon le premier mode, représenté sur la figure 6 et correspondant à la figure 2, le dispositif de commande 32 est activé par le calculateur 34, qui laisse le dispositif de commande 45 non activé. Dans ces conditions, l'électrovanne 31 adresse la pression de la ligne 15 aux sélecteurs 26 et 41. Il en résulte que ledit premier sélecteur 26 prend la position passante et que ledit second sélecteur 41 passe en position non passante sous l'action de la pression de la ligne 15, aidée par le ressort 42 et surmontant l'action du ressort 43. La gouverne 3 est donc alors commandée par le circuit hydraulique 17 à travers la valve de commande 18 ;
- selon le deuxième mode, représenté sur la figure 7 et correspondant à la figure 3, le calculateur 34 active le dispositif de commande 45, ainsi que le dispositif électronique de puissance 25, le dispositif de commande 19 et 32 restant inactivés. Par suite, l'électrovanne 31 et le premier sélecteur 26 sont non passants et la valve de commande 18 est inactive. En revanche, le dispositif de commande 45, aidé par le ressort 43, surmonte l'action du ressort 42. La gouverne est alors commandée par la pompe 23, elle-même pilotée par le calculateur 34 et le dispositif électronique de puissance 25 ;
- selon le troisième mode, représenté sur la figure 8 et correspondant à la figure 4, les dispositifs de commande 19, 32, 45 et le dispositif électronique de puissance 25 sont actionnés simultanément par le calculateur 34. Il en résulte donc que l'électrovanne 31 et le premier sélecteur 26 sont passants et il en est de même du second sélecteur 41, dont le dispositif de commande 45, aidé par le ressort 43, surmonte l'action du ressort 42 et de la pression dans la ligne 31 B. Par suite, la gouverne 3 est actionnée conjointement par le circuit hydraulique 17 et par la pompe 23.

## Revendications

1. Système d'actionnement hydraulique à commande électrique (1, 40), comportant :
- une servocommande (2), destinée à commander au moins un organe mobile (3) et comprenant un cylindre (4) à l'intérieur duquel peut se déplacer un piston (5) auquel est relié ledit organe mobile, ledit piston séparant ledit cylindre en deux chambres (6, 7), dont chacune d'elles est pourvue d'un orifice de raccordement hydraulique (8, 9), et ladite servocommande étant pourvue d'une valve de commande (18) reliée à un circuit hydraulique (17) dans lequel circule un fluide hydraulique sous pression ;
- une pompe hydraulique bidirectionnelle (23), entraînée en rotation par un moteur électrique (24) piloté par un dispositif électronique de puissance (25) ; et
- un dispositif de commutation (26, 28, 41) permettant de relier lesdits orifices de raccordement (8, 9) des chambres (6, 7), soit à ladite valve de commande (18), soit à ladite pompe (23),
**caractérisé en ce que** ledit dispositif de commutation (26, 28, 41) est apte de plus à relier lesdits orifices de raccordement hydraulique (8, 9) des chambres (6, 7) à la fois à ladite valve de commande (18) et à ladite pompe (23), pour permettre de fournir à ladite servocommande (2) la somme de la puissance hydraulique délivrée par ledit circuit hydraulique (17) et de la puissance hydraulique, d'origine électrique, engendrée par ladite pompe actionnée par ledit moteur électrique (24).

2. Système selon la revendication 1,
**caractérisé :**
- **en ce que** ledit dispositif de commutation est constitué par un premier et un second sélecteurs (26, 28, 41) à commandes spécifiques ;
- **en ce que** ledit premier sélecteur (26) est interposé entre ladite valve de commande (18) et lesdits orifices de raccordement hydraulique (8, 9), tandis que le second sélecteur (28, 41) est disposé entre ces derniers et ladite pompe (23) ; et
- **en ce que** les commandes spécifiques desdits premier et second sélecteurs (26, 28, 41) permettent de relier lesdits orifices de raccordement hydraulique (8, 9), non seulement à ladite valve de commande (18) ou à ladite pompe (23), mais encore à la fois à ladite valve de commande (18) et à ladite pompe (23).

3. Système selon la revendication 2,
**caractérisé en ce que** ledit premier sélecteur (26) :
- peut prendre soit un état passant, soit un état non passant ;
- prend spontanément son état non passant ; et
- est forcé à son état passant par l'action de la pression du fluide hydraulique dudit circuit hydraulique (17), à travers une électrovanne commandée (31).

4. Système selon l'une des revendications 2 ou 3,
**caractérisé en ce que** ledit second sélecteur (28) :
- peut prendre soit un état passant, soit un état non passant ;
- prend spontanément son état non passant ; et
- est forcé à son état passant par l'action d'un dispositif de commande (30).

5. Système selon la revendication 2,
**caractérisé en ce que** ledit second sélecteur (41) :
- peut prendre l'un ou l'autre des trois états, à savoir un état passant, un état non passant ou bien un état passif pour lequel ledit second sélecteur (41) établit une communication extérieure avec restriction (44) entre lesdits orifices de raccordement hydraulique (8, 9) ;
- prend spontanément ledit état passif ;
- est forcé à son état passant par l'action d'un dispositif de commande (45) ; et
- est forcé à son état non passant par l'action de la pression du fluide hydraulique dudit circuit hydraulique (17), à travers ladite électrovanne commandée (31).

## Patentansprüche

1. Elektrisch gesteuertes hydraulisches Antriebssystem (1, 40) mit:
- einer Servosteuerung (2), die der Steuerung von mindestens einem beweglichen Organ (3) dient, und einen Zylinder (4) umfasst, in dessen Inneren sich ein verschiebbarer Kolben (5) befindet, an dem das bewegliche Organ befestigt ist, wobei der Kolben den Zylinder in zwei Kammern (6, 7) unterteilt, von denen jede mit einem Hydraulikanschluss (8, 9) versehen ist, und die Servosteuerung mit einem Steuerventil (18) versehen ist, das mit einem Hydraulikkreis (17) verbunden ist, in dem eine Hydraulikflüssigkeit unter Druck fließt;
- einer bidirektionalen Hydraulikpumpe (23), die von einem von einer leistungselektronischen Vorrichtung (25) gesteuerten Elektromotor (24) drehangetrieben wird; und
- einer Umschaltvorrichtung (26, 28, 41), die es ermöglicht, die Hydraulikanschlüsse (8, 9) der Kammern (6, 7) entweder mit dem Steuerventil (18) oder mit der Pumpe (23) zu verbinden,
**dadurch gekennzeichnet, dass** die Umschaltvorrichtung (26, 28, 41) dafür geeignet ist, die Hydraulikanschlüsse (8, 9) der Kammem (6, 7) mit dem Steuerventil (18) und mit der Pumpe (23) gleichzeitig zu verbinden, und es dadurch zu ermöglichen, dass der Servosteuerung (2) die Summe aus der hydraulischen Leistung, die der Hydraulikkreis (17) liefert, und der hydraulischen leistung elektrischen Ursprungs, die von der vom Elektromotor (24) angetriebenen Pumpe erzeugt wird, zugeführt wird.

2. System gemäß Anspruch 1,
**dadurch gekennzeichnet, dass**:
- die Umschaltvorrichtung aus einem ersten und einem zweiten Wechselventif (26, 28, 41) für spezielle Steuerungen besteht;
- das erste Wechselventil (26) zwischen dem Steuerventil (18) und den Hydraulikanschlüssen (8, 9) angebracht ist, während sich das zweite Wechselventil (28, 41) zwischen den Hydraulikanschlüssen (8, 9) und der Pumpe (23) befindet; und
- die speziellen Steuerungen des ersten und zweiten Wechselventils (26, 28, 41) es ermöglichen, die Hydraulikanschlüsse (8, 9) nicht nur entweder mit dem Steuerventil (18) oder mit der Pumpe (23) zu verbinden, sondern auch mit dem Steuerventil (18) und mit der Pumpe (23) gleichzeitig.

3. System gemäß Anspruch 2,
**dadurch gekennzeichnet, dass** das erste Wechselventil (26):
- entweder einen Durchlasszustand oder einen Sperrzustand annehmen kann;
- von selbst seinen Sperrzustand annimmt; und
- über ein gesteuertes Elektroventil (31) durch die Druckwirkung der Hydraulikflüssigkeit des Hydraulikkreises (17) in seinen Durchlasszustand gezwungen wird.

4. System gemäß einem der Ansprüche 2 oder 3,
**dadurch gekennzeichnet, dass** das zweite Wechselventil (28):
- entweder einen Durchlasszustand oder einen Sperrzustand annehmen kann;
- von selbst seinen Sperrzustand annimmt; und
- durch die Wirkung einer Steuervorrichtung (30) in seinen Durchlasszustand gezwungen wird.

5. System gemäß Anspruch 2,
**dadurch gekennzeichnet, dass** das zweite Wechselventil (41):
- irgendeinen der drei Zustände annehmen kann, und zwar einen Durchlasszustand, einen Sperrzustand oder einen passiven Zustand, für den das zweite Wechselventil (41) eine externe Verbindung mit Durchlassbegrenzung (44) zwischen den Hydraulikanschlüssen (8, 9) herstellt;
- von selbst seinen passiven Zustand annimmt;
- durch die Wirkung einer Steuervorrichtung (45) in seinen Durchlasszustand gezwungen wird;
und
- über das gesteuerte Elektroventil (31) durch die Druckwirkung der Hydraulikflüssigkeit des Hydraulikkreises (17) in seinen Sperrzustand gezwungen wird.

## Claims

1. An electrically controlled hydraulic actuating system (1, 40) comprising:
- a servocontrol (2), intended to control at least one moving part (3) and comprising a cylinder (4) inside which a piston (5) to which said moving part is connected can move, said piston dividing said cylinder into two chambers (6, 7), each of which is provided with a hydraulic connection port (8, 9), and said servocontrol being provided with a control valve (18) connected to a hydraulic circuit (17) in which a hydraulic fluid under pressure circulates;
- a two-way hydraulic pump (23), driven in rotation by an electric motor (24) driven by power electronics (25); and
- a switching device (26, 28, 41) allowing said connection ports (8, 9) of the chambers (6, 7) to be connected either to said control valve (18) or to said pump (23),
**characterized in that** said switching device (26, 28, 41) is additionally able to connect said hydraulic connection ports (8, 9) of the chambers (6, 7) both to said control valve (18) and to said pump (23), so as to allow said servocontrol (2) to be supplied the sum of the hydraulic power delivered by said hydraulic circuit (17) and of the hydraulic power, of electrical origin, generated by said pump actuated by said electric motor (24).

2. The system as claimed in claim 1,
**characterized:**
- **in that** said switching device consists of a first and of a second selector (26, 28, 41), with specific controls;
- **in that** said first selector (26) is inserted between said control valve (18) and said hydraulic connection ports (8, 9), while the second selector (28, 41) is arranged between the latter and said pump (23); and
- **in that** the specific controls of said first and second selectors (26, 28, 41) allow said hydraulic connection ports (8, 9) to be connected not only to said control valve (18) or to said pump (23), but also to both said control valve (18) and said pump (23).

3. The system as claimed in claim 2,
**characterized in that** said first selector (26):
- can adopt either a passing state or a non-passing state;
- spontaneously adopts its non-passing state; and
- is forced into its passing state by the action of the pressure of the hydraulic fluid of said hydraulic circuit (17), through a controlled electric valve (31).

4. The system as claimed in one of claims 2 and 3,
**characterized in that** said second selector (28):
- can adopt either a passing state or a non-passing state;
- spontaneously adopts its non-passing state; and
- is forced into its passing state by the action of a control device (30).

5. The system as claimed in claim 2,
**characterized in that** said second selector (41):
- can adopt any one of three states, namely a passing state, a non-passing state or alternatively a passive state for which said second selector (41) establishes external communication with restriction (44) between said hydraulic connection ports (8, 9);
- spontaneously adopts said passive state;
- is forced into its passing state by the action of a control device (45); and
- is forced into its non-passing state by the action of the pressure of the hydraulic fluid of said hydraulic circuit (17), through said controlled electric valve (31).
